(19) Europäisches Patentamt
European Patent Office
Office européen des brevets

(11) EP 4 355 825 B1

(12) EUROPEAN PATENT SPECIFICATION

(45) Date of publication and mention of the grant of the patent:
**16.04.2025 Bulletin 2025/16**

(21) Application number: **22732147.8**

(22) Date of filing: **03.06.2022**

(51) International Patent Classification (IPC):
***C08L 23/16*** *(2006.01)*

(52) Cooperative Patent Classification (CPC):
(C-Sets available)
**C08L 23/16;** C08L 2205/035; C08L 2205/08; C08L 2205/16; C08L 2207/02 (Cont.)

(86) International application number:
**PCT/EP2022/065248**

(87) International publication number:
**WO 2022/263212 (22.12.2022 Gazette 2022/51)**

# (54) FILLED POLYOLEFIN COMPOSITION

GEFÜLLTE POLYOLEFINZUSAMMENSETZUNG

COMPOSITION DE POLYOLÉFINE CHARGÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2021 EP 21179696**

(43) Date of publication of application:
**24.04.2024 Bulletin 2024/17**

(73) Proprietor: **Basell Poliolefine Italia S.r.l.**
**20121 Milano (IT)**

(72) Inventors:
- **KÖHLER, Rainer**
**91257 Pegnitz (DE)**
- **DUREEV, Mikhail**
**35510 Butzbach (DE)**
- **GRAZZI, Michele**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2015/000738**
**WO-A1-2019/219678**
**WO-A1-2020/220255**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/16, C08L 23/142, C08L 23/142,**
**C08L 23/16, C08K 7/14**

## Description

### FIELD OF THE INVENTION

The present disclosure relates to a filled polyolefin compositions that can be used for injection molding, the composition having an improved balance of mechanical properties.

### BACKGROUND OF THE INVENTION

Filled polypropylene compounds based on heterophasic polyolefin compositions are widely used in the automotive industry to obtain injection molded parts having aesthetical interior applications.

Glass fibers reinforced heterophasic polyolefin compositions known in the art are generally characterized by a good balance of stiffness and impact, soft touch haptic and good scratch resistance.

The International patent application WO2013/064364 discloses a composition suitable for foamed injection molded articles having good free-flowing properties and uniform cell characteristics, the composition comprising 40-85% by weight of a first propylene based component having a flexural modulus higher than 800 MPA, 5-20% by weight of an heterophasic propylene polymer comprising 20-90% by weight of crystalline polypropylene and 10-80% by weight of an ethylene-propylene copolymer containing 10-70% by weight of ethylene and 10-40% by weight of glass fibers.

The patent application WO2015/000738 discloses easily processable polyolefin compositions having good impact/stiffness balance and low density, the composition having a melt flow rate from 2 to 100 g/10 min. and comprising 30-60% by weight of a polyolefin composition comprising 10-50% by weight of a propylene copolymer containing 1-8% of comonomer and 50-90% by weight of a copolymer of an ethylene copolymer containing 50-80% by weight of ethylene, 5-30% by weight of a glass fiber filler, 0-5% by weight of a compatibilizer and 10-40% by weight of a further polymer component.

WO2019/219678A1 discloses a composition comprising two HECOs and an inorganic filler for automotive applications, wherein the filler is not glass fibers.

WO2022/220255 discloses a fiber reinforced material comprising a HECO, a plastomer, glass fibers and a compatibilizer suitable for producing automotive interior trim articles.

In this context, it is still desirable to make available glass fibers filled polyolefin compositions retaining or improving the properties of the prior art blends, namely the balance of mechanical properties, the good flowability, the soft touch haptic, the low shrinkage and the high scratch resistance.

### SUMMARY OF THE INVENTION

The present disclosure provides a filled polymer composition comprising:

(a) 65-90% by weight of a polyolefin blend comprising:

(i) 30-70% by weight of a first heterophasic polypropylene HECO1 comprising:

(A1) 10-40% by weight of a copolymer of propylene with hexene-1 comprising 1.0-6.0% by weight, based on the weight of (A1), of units deriving from hexene-1 and having melt flow rate MFR(A1) measured according to ISO 1133, 230°C, 2.16 kg, equal to or greater than 20 g/10 min; and

(B1) 60-90% by weight of a copolymer of propylene with at least one alpha-olefin of formula $CH_2$=CHR, and optionally a diene, where R is H or a linear or branched C2-C8 alkyl, the copolymer comprising 20-35% by weight, based on the weight of (B1), of monomer units deriving from the alpha-olefin,

wherein

- the heterophasic polypropylene HECO1 comprises an amount of fraction soluble in xylene (XS1) at 25°C equal to or higher than 65% by weight, and
- the amounts of (A1), (B1) and XS1 are based on the total weight of (A1)+(B1); and

(ii) 70-30% by weight of a second heterophasic polypropylene HECO2 having melt flow rate MFR(2), measured according to ISO 1133, 230°C, 2.16 kg, equal to or greater than 80 g/10 min. and comprising:

(A2) 75-90% by weight of a propylene homopolymer or a propylene copolymer with at least one alpha-olefin of formula $CH_2$=CHR, where R is H or a linear or branched C2-C8 alkyl, the copolymer comprising up to and

including 10% by weight, based on the weight of (A2), of monomer units deriving from the alpha-olefin; and
(B2) 10-25% by weight of a copolymer of propylene with at least one alpha-olefin of formula $CH_2$=CHR, and optionally a diene, where R is H or a linear or branched C2-C8 alkyl, the copolymer comprising 30-60% by weight, based on the weight of (B2), of monomer units deriving from the alpha-olefin, the amounts of (A2) and (B2) being based on the total weight of (A2)+(B2),

wherein the amounts of HECO1 and HECO2 are based on the total weight of HECO1+HECO2;

(b) 10-35% by weight of glass fibers; and
(c) 0-5% by weight of a compatibilizer,

wherein the amounts of (a), (b) and (c) are based on the total weight of (a)+(b)+(c).

The polyolefin composition of the present disclosure shows a good balance of mechanical properties, in particular of impact and strength, in combination with a high melt flow rate.

The polyolefin composition of the instant disclosure are also endowed with low shrinkage and adequate scratch resistance.

While multiple embodiments are disclosed, still other embodiments will become apparent to those skilled in the art from the following detailed description. As will be apparent, certain embodiments, as disclosed herein, are capable of modifications in various obvious aspects, all without departing from the spirit and scope of the claims as presented herein. Accordingly, the following detailed description is to be regarded as illustrative in nature and not restrictive.

DETAILED DESCRIPTION OF THE INVENTION

In the context of the present disclosure;

- the percentages are expressed by weight, unless otherwise specified;
- when the term "comprising" is referred to a polymer or to a polymer composition, mixture or blend, it should be construed to mean "comprising or consisting essentially of";
- the term "consisting essentially of" means that, in addition to those components which are mandatory, other components may also be present in a polymer or in a polymer composition, mixture or blend, provided that the essential characteristics of the polymer or of the composition, mixture or blend are not materially affected by their presence. Examples of components that, when present in customary amounts, do not materially affect the characteristics of a polymer or of a polyolefin composition, mixture or blend are catalyst residues, antistatic agents, melt stabilizers, light stabilizers, antioxidants and antiacids.

The total weight of a polymer or of a polymer composition sums up to 100%, unless otherwise specified.

In one embodiment, the filled polyolefin composition comprises or consists of:

(a) 65-90% by weight, preferably 70-85% by weight, of a polyolefin blend comprising:

(i) 30-70% by weight of a first heterophasic polypropylene HECO1 comprising:

(A1) 10-40% by weight of a copolymer of propylene with hexene-1 comprising 1.0-6.0% by weight, based on the weight of (A1), of units deriving from hexene-1 and having melt flow rate MFR(A1) measured according to ISO 1133, 230°C, 2.16 kg, equal to or greater than 20 g/10 min; and
(B1) 60-90% by weight of a copolymer of propylene with at least one alpha-olefin of formula $CH_2$=CHR, and optionally a diene, where R is H or a linear or branched C2-C8 alkyl, the copolymer comprising 20-35% by weight, based on the weight of (B1), of monomer units deriving from the alpha-olefin,

wherein

- the heterophasic polypropylene HECO1 comprises an amount of fraction soluble in xylene (XS1) at 25°C equal to or higher than 65% by weight, and
- the amounts of (A1), (B1) and XS1 are based on the total weight of (A1)+(B1); and

(ii) 70-30% by weight of a second heterophasic polypropylene HECO2 having melt flow rate MFR(2), measured according to ISO 1133, 230°C, 2.16 kg, equal to or greater than 80 g/10 min. and comprising:

(A2) 75-90% by weight of a propylene homopolymer or a propylene copolymer with at least one alpha-olefin of formula $CH_2$=CHR, where R is H or a linear or branched C2-C8 alkyl, the copolymer comprising up to and including 10% by weight, based on the weight of (A2), of monomer units deriving from the alpha-olefin; and
(B2) 10-25% by weight of a of a copolymer of propylene with at least one alpha-olefin of formula $CH_2$=CHR, and optionally a diene, where R is H or a linear or branched C2-C8 alkyl, the copolymer comprising 30-60% by weight, based on the weight of (B2), of monomer units deriving from the alpha-olefin, the amounts of (A2) and (B2) being based on the total weight of (A2)+(B2),

wherein the amounts of HECO1 and HECO2 are based on the total weight of HECO1+HECO2;

(b) 10-35% by weight of glass fibers;
(c) 0-5% by weight, preferably 0.1-5% by weight, more preferably 0.5-3% by weigh, still more preferably 0.7-2% by weight, of a compatibilizer; and

wherein the amount of (a), (b) and (c) are based on the total weight of (a)+(b)+(c).

The heterophasic polypropylene HECO1 comprises a propylene copolymer (A1) preferably comprising 2.0-5.0% by weight, preferably 2.8-4.8% by weight, more preferably 3.0-4.0% by weight, based on the weight of component (A1), of units deriving from hexene-1.

In a preferred embodiment, the propylene copolymer (A1) comprises hexene-1 as sole comonomer.

In an alternative embodiment, the propylene copolymer (A1) comprises hexene-1 and 0.1-3.0% by weight, based on the weight of component (A1), of at least one further alpha-olefin selected from the group consisting of ethylene, butene-1, 4-methyl-1-pentene, octene-1 and combinations thereof.

Preferably, the propylene copolymer (A1) has melt flow rate MFR(A1) measured according to ISO 1133, 230°C ranging from 20 to 120 g/10 min, more preferably from 25 to 100 g/10 min.

In some embodiments, the propylene copolymer (A1) comprises an amount of fraction soluble in xylene at 25°C XS(A1) lower than 12.0% by weight, based on the weight of component (A1), preferably lower than 9.0% by weight, in preferred embodiments XS(A1) is comprised in the range 5.0-12.0% by weight, preferably 5.0-9.0% by weight, more preferably 6.0-8.0% by weight.

Preferably, the propylene copolymer (B1) comprises an amount of fraction soluble in xylene at 25°C XS(B1) equal to or greater than 80% by weight, based on the total weight of component (B1), preferably equal to or greater than 85% by weight, more preferably equal to or greater than 90% by weight.

In one embodiment, the upper limit of the amount of the fraction of component (B1) soluble in xylene at 25°C XS(B1) is 97% by weight, based on the total weight of component (B1), for each lower limit.

In some embodiments, the component (B1) comprises a first copolymer (B1.1) and a second copolymer (B1.2) of propylene with at least one alpha-olefin of formula $CH_2$=CHR, and optionally a diene, where R is H or a linear or branched C2-C8 alkyl, provided that the total amount of alpha-olefin comprised in the propylene copolymer (B1) is 20-35% by weight, based on the total weight of component (B1).

In one embodiment, the component (B1) comprises:

(B1.1) 30-60% by weight, preferably 40-55% by weight, of a first copolymer of propylene with at least one alpha-olefin of formula $CH_2$=CHR, and optionally a diene, where R is H or a linear or branched C2-C8 alkyl, and wherein the copolymer (B1.1) comprises 20-40% by weight, preferably 25-35% by weight of alpha-olefin and a fraction soluble in xylene at 25°C XS(B1.1) equal to or greater than 80% by weight, preferably equal to or greater than 85% by weight, more preferably equal to or greater than 90% by weight, the amount of alpha-olefin and of XS(B1.1) being based on the weight of component (B1.1); and
(B1.2) 40-70% by weight, preferably 45-60% by weight, of a second copolymer of propylene with at least one alpha-olefin of formula $CH_2$=CHR, and optionally a diene, where R is H or a linear or branched C2-C8 alkyl, and wherein the copolymer (B1.2) comprises 25-45% by weight, preferably 30-43% by weight, of alpha-olefin and a fraction soluble in xylene at 25°C XS(B1.2) equal to or greater than 80% by weight, preferably equal to or greater than 85% by weight, more preferably equal to or greater than 90% by weigh, the amount of alpha-olefin and of XS(B1.2) being based on the weight of component (B1.2),

wherein the amounts of (B1.1) and (B1.2) are based on the total weight of (B1.1)+(B1.2).

In one embodiment, the upper limit of XS(B1.1) and/or of XS(B1.2) is 97% by weight for each lower limit, XS(B1.1) and XS(B1.2) being based on the weight of component (B1.1) and (B1.2) respectively.

In some embodiments, the first heterophasic polypropylene HECO1 comprises an amount of fraction soluble in xylene at 25°C XS(1) equal to or greater than 70% by weight, based on the total weight of (A1)+(B1), preferably ranging from 71 to 90% by weight, more preferably from 72 to 80% by weight.

Preferably, the first heterophasic polypropylene HECO1 has melt flow rate MFR(1), measured according to ISO 1133, 230°C, 2.16 kg, ranging from 5 to 50 g/10 min., more preferably from 10 to 30 g/10 min., still more preferably from 12 to 25 g/10.min.

In a preferred embodiment, the melt flow rate MFR(1) of the first heterophasic polypropylene HECO1 measured according to ISO 1133, 230°C, 2.16 kg ranging from 5 to 50 g/10 min., preferably from 10 to 30 g/10 min., more preferably from 12 to 25 g/10.min. is obtained by visbreaking the heterophasic polypropylene obtained from the polymerization reaction.

The visbreaking is carried out by methods known in the art, eg. by mixing the polyolefin with an organic peroxide in the molten state.

Preferably, the intrinsic viscosity of the fraction soluble in xylene XSIV(1) of the first heterophasic polypropylene HECO1 is equal to or lower than 1.5 dl/g.

Preferably, the heterophasic polypropylene HECO1 comprises 15-35% by weight, preferably 20-30% by weight of component (A1) and 65-85% by weight, preferably 70-80% by weight of component (B1), wherein the amounts of (A1) and (B1) are based on the total weight of (A1)+(B1).

Preferably, the at least one alpha-olefin comprised in component (B1) is selected from the group consisting of ethylene, butene-1, hexene-1, 4-methy-pentene-1, octene-1 and combinations thereof, ethylene being the most preferred.

Optionally, the propylene copolymer (B1) comprises recurring units derived from a diene, the diene being preferably independently selected from the group consisting of butadiene, 1,4-hexadiene, 1,5-hexadiene, ethylidene-1-norbonene and combinations thereof.

In some embodiments, the total amount of recurring units deriving from a diene ranges from 1 to 10% by weight, based on the weight of component (B1).

In a particularly preferred embodiment, the heterophasic polypropylene HECO1 comprises:

(A1) 10-40% by weight, 15-35% by weight, preferably 20-30% by weight of a copolymer of propylene with hexene-1 comprising 1.0-6.0% by weight, preferably 2.0-5.0% by weight, more preferably 2.8-4.8% by weight, still more preferably 3.0-4.0% by weight, based on the weight of component (A1), of hexene-1, the copolymer (A1) having melt flow rate MFR(A1) measured according to ISO 1133, 230°C, 2.16 kg equal to or greater than 20 g/10 min., equal to or greater than 25 g/10 min., preferably ranging from 20 to 120 g/10 min, more preferably from 25 to 100 g/10 min; and
(B1) 60-90% by weight, 65-85% by weight, preferably 70-80% by weight, of a copolymer of propylene with ethylene comprising 20-35% by weight of ethylene, based on the total weight of component (B1),

wherein the heterophasic polypropylene HECO1:

- comprises an amount of fraction soluble in xylene at 25°C XS(1) equal to or greater than 65% by weight, preferably equal to or greater than 70% by weight, more preferably ranging from 71 to 90% by weight, still more preferably from 72 to 80% by weight;
- has melt flow rate MFR(1) measured according to ISO 1133, 230°C, 2.16 kg ranging from 5 to 50 g/10 min., preferably from 10 to 30 g/10 min., more preferably from 12 to 25 g/10.min., the MFR(1) being obtained by visbreaking the heterophasic polypropylene obtained from the polymerization reaction, and

wherein the amounts of (A1), (B1) and XS(1) are based on the total weight of (A1)+(B1) and wherein (A1) and (B1) are as described above.

The heterophasic polypropylene HECO1 preferably has at least one of the following mechanical properties:

- flexural modulus ranging from 50 to 90 MPa, preferably from 60 to 85 MPa, more preferably from 65 to 80 MPa, measured according to ISO 178:2019 on 4mm-thick injection molded specimens obtained according to the method ISO 1873-2:2007; and/or
- Shore A value equal to or lower than 90, measured on compression molded plaques according to method ISO 868 (15 sec). In one embodiment, the Shore A value is comprised in the range 70-90; and/or
- Shore D value equal to or lower than 30, measured on compression molded plaques according to method ISO 868 (15 sec). In one embodiment, the Shore D value is comprised in the range 23-30.

In a preferred embodiment, the heterophasic polypropylene HECO1 has flexural modulus, Shore A and Shore D values comprised in the ranges indicated above.

The heterophasic polypropylene HECO1 is preferably prepared by a sequential polymerization process comprising at least two stages, wherein the second and each subsequent polymerization stage is carried out in the presence of the polymer produced and the catalyst present in the immediately preceding polymerization stage.

The polymerization processes is carried out in the presence of a catalyst selected from metallocene compounds, highly stereospecific Ziegler-Natta catalyst systems and combinations thereof.

In a preferred embodiment, the polymerization processes is carried out in the presence of a highly stereospecific Ziegler-Natta catalyst system comprising:

(1) a solid catalyst component comprising a magnesium halide support on which a Ti compound having at least a Ti-alogen bond is present, and a stereoregulating internal donor;
(2) optionally, but preferably, an Al-containing cocatalyst; and
(3) optionally, but preferably, a further electron-donor compound (external donor).

In some preferred embodiments, the solid catalyst component (1) comprises a titanium compound of formula $Ti(OR)_nX_{y_n}$, wherein n is comprised between 0 and y; y is the valence of titanium; X is halogen and R is a hydrocarbon group having 1-10 carbon atoms or a -COR group. Among them, particularly preferred are titanium compounds having at least one Ti-halogen bond such as titanium tetrahalides or titanium halogenalcoholates. Preferred specific titanium compounds are $TiCl_3$, $TiCl_4$, $Ti(OBu)_4$, $Ti(OBu)Cl_3$, $Ti(OBu)_2Cl_2$, $Ti(OBu)_3Cl$. $TiCl_4$ is particularly preferred.

In one embodiment, the solid catalyst component (1) comprises a titanium compound in an amount securing the presence of from 0.5 to 10% by weight of Ti with respect to the total weight of the solid catalyst component (1).

The solid catalyst component (1) comprises at least one stereoregulating internal electron donor compound selected from mono or bidentate organic Lewis bases, preferably selected from esters, ketones, amines, amides, carbamates, carbonates, ethers, nitriles, alkoxysilanes and combinations thereof.

Particularly preferred are the electron donors belonging to aliphatic or aromatic mono- or dicarboxylic acid esters and diethers.

Among alkyl and aryl esters of optionally substituted aromatic polycarboxylic acids, preferred donors are the esters of phthalic acids such as those described in EP45977A2 and EP395083A2.

In some embodiments, the internal electron donor is selected from the group consisting of mono- or di-substituted phthalates, wherein the substituents are independently selected among linear or branched $C_{1-10}$ alkyl, $C_{3-8}$ cycloalkyl and aryl radicals.

In some preferred embodiments, the internal electron donor is selected among di-isobutyl phthalate, di-n-butyl phthalate, di-n-octyl phthalate, diphenyl phthalate, benzylbutyl phthalate and combinations thereof.

In one embodiment, the internal electron donor is di-isobutyl phthalate.

Esters of aliphatic acids can be selected from malonic acids such as those described in WO98/056830, WO98/056833, WO98/056834, glutaric acids such as those disclosed in WO00/55215, and succinic acids such as those disclosed WO00/63261.

Particular type of diesters are those deriving from esterification of aliphatic or aromatic diols such as those described in WO2010/078494 and USP 7,388,061.

In some embodiments, the internal electron donor is selected from 1,3-diethers of formula

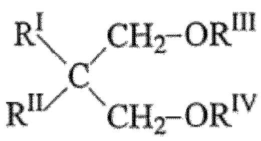

(I)

wherein $R^I$ and $R^{II}$ are independently selected from $C_{1-18}$ alkyl, $C_{3-18}$ ccycloalkyl and $C^{7-18}$ aryl radicals, $R^{III}$ and $R^{IV}$ are independently selected from $C_{1-4}$ alkyl radicals; or the carbon atom in position 2 of the 1,3-diether belongs to a cyclic or polycyclic structure made up of from 5 to 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structures), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures, wherein one or more of the above mentioned alkyl, cycloalkyl, aryl, aralkyl, or alkaryl radicals and the condensed cyclic structures optionally contain one or more heteroatom(s) as substitutes for carbon and/or hydrogen atoms. Ethers of this type are described in EP361493, EP728769 and WO02/100904.

When 1,3-diethers described above are used, the external electron donor (3) can be absent.

In some cases, specific mixtures of internal donors, in particular between aliphatic or aromatic mono or dicarboxylic acid esters and 1,3-diethers as disclosed in WO07/57160 and WO2011/061134 can be used as internal donor.

Preferred magnesium halide support is magnesium dihalide.

In one embodiment, the amount of internal electron donor which remains fixed on the solid catalyst component (1) is 5 to 20% by moles, with respect to the magnesium dihalide.

Preferred methods for the preparation of the solid catalyst components start from Mg dihalide precursors that upon reaction with titanium chlorides converts the precursor into the Mg dihalide support. The reaction is preferably carried out in the presence of the steroregulating internal donor.

In a preferred embodiment the magnesium dihalide precursor is a Lewis adduct of formula $MgCl_2 \cdot nR1OH$, where n is a number between 0.1 and 6, and R1 is a hydrocarbon radical having 1-18 carbon atoms. Preferably, n ranges from 1 to 5 and more preferably from 1.5 to 4.5.

The adduct can be suitably prepared by mixing alcohol and magnesium chloride, operating under stirring conditions at the melting temperature of the adduct (100-130°C).

Then, the adduct is mixed with an inert hydrocarbon immiscible with the adduct thereby creating an emulsion which is quickly quenched causing the solidification of the adduct in the form of spherical particles.

The so obtained adduct can be directly reacted with the Ti compound or it can be previously subjected to thermal controlled dealcoholation (80-130°C) so as to obtain an adduct in which the number of moles of alcohol is generally lower than 3 preferably between 0.1 and 2.5.

This controlled dealcoholation step may carried out in order to increase the morphological stability of the catalyst during polymerization and/or to increase the catalyst porosity as described in EP395083A2.

The reaction with the Ti compound can be carried out by suspending the optionally dealcoholated adduct in cold $TiCl_4$ (generally at 0°C). The mixture is heated up to 80-130°C and kept at this temperature for 0,5-2 hours. The treatment with $TiCl_4$ can be carried out one or more times. The stereoregulating internal donor can be added during the treatment with $TiCl_4$. The treatment with the internal donor can be repeated one or more times.

The preparation of catalyst components according to this general method is described for example in European Patent Applications US4,399,054, US4,469,648, WO98/44009A1 and as already mentioned, in EP395083A2.

In one embodiment, the catalyst component (1) is in the form of spherical particles having an average diameter ranging from 10 to 350 $\mu$m, a surface area ranging from 20 to 250 $m^2/g$, preferably from 80 to 200 $m^2/g$ and porosity greater that 0.2 ml/g, preferably of from 0.25 to 0.5 ml/g, wherein the surface area and the porosity are measured by BET.

In some preferred embodiments, the catalyst system comprises an Al-containing cocatalyst (2) selected from Al-trialkyls, preferably selected from the group consisting of Altryethyl, Al-triisobutyl and Al-tri-n-butyl.

In one embodiment, the Al/Ti weight ratio in the catalyst system is from 1 to 1000, preferably from 20 to 800.

In a preferred embodiment, the catalyst system comprises a further electron donor compound (3) (external electron donor) selected among silicon compounds, ethers, esters, amines, heterocyclic compounds, particularly 2,2,6,6-tetramethylpiperidine, and ketones.

Preferably, the external donor is selected among silicon compounds of formula (R2)a(R3)bSi(OR4)c, where a and b are integers from 0 to 2, c is an integer from 1 to 4 and the sum (a+b+c) is 4; R2, R3, and R4, are alkyl, cycloalkyl or aryl radicals with 1-18 carbon atoms, optionally containing heteroatoms. Particularly preferred are the silicon compounds in which a is 1, b is 1, c is 2, at least one of R2 and R3 is selected from branched alkyl, cycloalkyl or aryl groups with 3-10 carbon atoms, optionally containing heteroatoms, and R4 is a C1-C10 alkyl group, in particular methyl.

Examples of such preferred silicon compounds are selected among methylcyclohexyldimethoxysilane (C-donor), diphenyldimethoxysilane, methyl-t-butyldimethoxysilane, dicyclopentyldimethoxysilane (D-donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane and combinations thereof.

The silicon compounds in which a is 0, c is 3, R3 is a branched alkyl or cycloalkyl group, optionally containing heteroatoms, and R4 is methyl are also preferred. Examples of such silicon compounds are cyclohexyltrimethoxysilane, t-butyltrimethoxysilane and hexyltrimethoxysilane.

Even if several combinations of the components of the catalyst system allow to obtain the polyolefin compositions of the present disclosure, a particularly suitable catalyst system comprises di-isobutyl phthalate as internal electron donor and dicyclopentyl dimethoxy silane (D-donor) as external electron donor.

In one embodiment, the catalyst system is pre-contacted with small quantities of olefin (prepolymerization), maintaining the catalyst in suspension in a hydrocarbon solvent, and polymerizing at temperatures from 25° to 60°C producing a quantity of polymer from about 0.5 to about 3 times the weight of the catalyst system.

In an alternative embodiment, the prepolymerization is carried out in liquid monomer, producing a quantity of polymer 1000 times the weight of the catalyst system.

Sequential polymerization processes for preparing the heterophasic polypropylene HECO1 are described in EP472946 and WO03/011962, whose content is incorporated in this patent application for reference purposes.

The components (A1) and (B1) can be produced in any one of the polymerization stages.

In one embodiment, the process to prepare the heterophasic polypropylene HECO1 comprises at least two polymerization stages carried out in the presence of a highly stereospecific Ziegler-Natta catalyst system, wherein:

(a) in the first copolymerization stage monomers are polymerized to form the propylene copolymer (A1); and
(b) in the second copolymerization stage the relevant monomers are polymerized to form the propylene copolymer (B1), thereby obtaining the polymer granules.

In one embodiment, the second copolymerization stage (b) comprises a copolymerization stage (b1) and a copolymerization stage (b2), wherein the appropriate comonomers are polymerized to form the propylene copolymer (B1.1) in the stage (b1) and the appropriate comonomers are polymerized to form the propylene copolymer (B1.2) in the stage (b2).

The polymerization, which can be continuous or batch, can be carried out according to known cascade techniques operating either in mixed liquid phase/gas phase or, preferably, totally in gas phase.

The liquid-phase polymerization can be either in slurry, solution or bulk (liquid monomer). This latter technology is the most preferred and can be carried out in various types of reactors such as continuous stirred tank reactors, loop reactors or plug-flow reactors.

The gas-phase polymerization stages can be carried out in gas-phase reactors, such as fluidized or stirred, fixed bed reactors.

In one embodiment, the copolymerization stage (a) is carried out in liquid phase using liquid propylene as diluent and the copolymerization stage (b), or the copolymerization stages (b1) and (b2), are carried out in the gas phase.

In a preferred embodiment, also the copolymerization stage (a) is carried out in the gas phase.

In one embodiment, the reaction temperatures of the polymerization stages (a) and (b) are independently selected in the range from 40° to 90°C.

In one embodiment, the polymerization pressure of the copolymerization stage (a) carried out in liquid phase is from 3.3 to 4.3 MPa.

In one embodiment, the polymerization pressure of the copolymerization stages (a), and (b) carried out in gas-phase is independently selected in the range from 0.5 to 3.0 MPa.

The residence time of each polymerization stage depends upon the desired ratio of component (A1) to component (B1). In one embodiment, the residence time in each polymerization stage ranges from 15 minutes to 8 hours.

In a sequential polymerization process, the amounts of components (A1) and (B1) correspond to the split between the polymerization reactors.

The molecular weight of the propylene copolymers obtained in each polymerization stage is regulated using chain transfer agents, such as hydrogen or $ZnEt_2$

In one embodiment, the process to prepare the heterophasic polypropylene HECO1 comprises a step (c) of melt mixing the polymer granules with at least one organic peroxide and/or at least one additive (C) selected from the group consisting of antistatic agents, anti-oxidants, anti-acids, melt stabilizers and combinations thereof.

Preferably, the step (c) preferably comprises melt mixing the polymer granules with up to and including 1.0% by weight, preferably from 0.01 to 0.8% by weight, more preferably from 0.01 to 0.5% by weight, of the at least one additive (C) and/or with up to and including 0.2% by weight, preferably up to and including 0.1% by weight, of an organic peroxide, wherein:

- at least one additive (C) is selected from the group consisting of antistatic agents, anti-oxidants, anti-acids, melt stabilizers and combinations thereof, of the type used in the polyolefin field; and
- the amount of the additive and of the organic peroxide is based on the weight of the polymer comprising the additives and/or the peroxide.

Thus, in one embodiment, the heterophasic polypropylene HECO1 comprises up to and including 1.0% by weight, preferably from 0.01 to 0.8% by weight, more preferably from 0.01 to 0.5% by weight, of the at least one additive (C) selected from the group consisting of antistatic agents, anti-oxidants, anti-acids, melt stabilizers and combinations thereof, of the type used in the polyolefin field, and up to and including 0.2% by weigh, preferably up to and including 0.1% by weight of an organic peroxide, wherein the amount of the additive and of the organic peroxide is based on the weight of the polymer comprising the additive (C) and/or the organic peroxide.

In one embodiment, the lower limit of the amount of the organic peroxide is of 0.01 % by weight, based on the weight of the polymer comprising the organic peroxide and optionally the additive (C), for each lower limit.

In one embodiment, the heterophasic polypropylene HECO1 consists of component (A1) and (B1), the at least one additive (C) and the organic peroxide, preferably in the amounts as described above.

The heterophasic polypropylene HECO2 is different from the heterophasic polypropylene HECO2 and has melt flow rate MFR(2) measured according to ISO 1133, 230°C, 2.16 kg equal to or greater than 80 g/10 min, preferably ranging from 80 to 150 g/10 min., still more preferably from 90 to 120 g/10 min.

In one preferred embodiment, the propylene polymer (A2) comprises up to and including 10% by weight of units deriving from ethylene as the sole comonomer.

Preferably, the at least one alpha-olefin comprised in component (B2) is selected from the group consisting of ethylene, butene-1, hexene-1, 4-methy-pentene-1, octene-1 and combinations thereof, ethylene being the most preferred.

Optionally, the propylene copolymer (B2) comprises recurring units derived from a diene, the diene being preferably independently selected from the group consisting of butadiene, 1,4-hexadiene, 1,5-hexadiene, ethylidene-1-norbonene and combinations thereof.

In some embodiments, the total amount of recurring units deriving from a diene ranges from 1 to 10% by weight, based on the weight of component (B2).

In a preferred embodiment, the heterophasic polypropylene HECO2 has at least one of the following mechanical properties, measured on 4mm-thick injection molded specimens obtained according to the method ISO 1873-2:2007:

- flexural modulus measured according to the method ISO 178:2019 equal to or greater than 800 MPa, preferably equal to or greater than 1000 MPa. In one embodiment, the flexural modulus has an upper limit of 1300 MPa, preferably of 1200 MPa for each lower limit; and/or
- tensile modulus measured according to the method ISO 527-1, -2 equal to or greater than 1000 MPa, In one embodiment, the tensile modulus has an upper limit of 1400 MPa, preferably of 1300 MPa for each lower limit; and/or
- tensile stress at yield measured according to the method ISO 527-1, -2 in the range 20-35 MPa; and/or
- tensile strain at yield measured according to the method ISO 527-1, -2 in the range 3-10%; and/or
- Charpy impact strength (notched, 23°C) measured according to the method ISO 179 1eA ranging from 2.0 to 10; and/or
- Vicat A softening temperature measured according to the method ISO 306 (A/50 N) equal to or greater than 145°C, preferably in the range from 145°C to 155°C.

In one preferred embodiment, the heterophasic polypropylene HECO2 is endowed with all the properties above.

The heterophasic polypropylene HECO2 is preferably prepared by a sequential polymerization process comprising at least two stages, wherein the second and each subsequent polymerization stage is carried out in the presence of the polymer produced and the catalyst present in the immediately preceding polymerization stage.

The catalyst systems and the polymerization process described above for producing the heterophasic polypropylene HECO1 are also suitable for producing the heterophasic polypropylene HECO2.

In one embodiment, the heterophasic polypropylene HECO2 comprises up to and including 0.5% by weight, preferably from 0.01 to 0.5% by weight, more preferably from 0.01 to 0.3% by weight, based on the weight of the heterophasic polypropylene HECO2 comprising the additive, of the at least one additive (C) selected from the group consisting of antistatic agents, anti-oxidants, anti-acids, melt stabilizers and combinations thereof, of the type used in the polyolefin field.

The polyolefin composition of the present disclosure comprises glass fibers (b) preferably having diameter of up to and including 50 μm, more preferably ranging from 5 to 20 μm, still more preferably from 8 to 15 μm and length equal to or lower than 10 mm, preferably ranging from 0.1 to 10 mm, more preferably from 1 to 8 mm, more preferably from 2 to 6 mm.

E-glass fibers are particularly preferred and generally available as sized fibers, i.e. coated with a coupling agent which increases the compatibility of the fibers with the polymer into which the fibers are dispersed.

A compatibilizer (c) is optionally but preferably present in the filled polyolefin composition, and it is preferably a modified olefin polymer functionalized with a polar compound.

The functionalizing polar compound includes, but is not limited to, acid anhydrides, carboxylic acids, carboxylic acid derivatives, primary and secondary amines, hydroxyl compounds, oxazoline, epoxides, ionic compounds and combinations thereof. Specific examples of functionalizing polar compounds are unsaturated cyclic anhydrides, their aliphatic diesters, and diacid derivatives.

Preferably, the compatibilizer (c) is a polyolefin selected from polyethylenes, polypropylenes and mixtures thereof, functionalized with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid and mixtures thereof.

In a particularly preferred embodiment, the compatibilizer (c) is a polyethylene and/or a polypropylene grafted with maleic anhydride (MAH-g-PP and/or MAH-g-PE).

Modified olefin polymers functionalized with a polar compound are known in the art and can be produced by functionalization processes carried out in solution, in the solid state or preferably in the molten state, eg. by reactive extrusion of the polymer in the presence of the grafting compound and of a free radical initiator. Functionalization of polypropylene and/or polyethylene with maleic anhydride is described for instance in EP0572028A1.

Examples of modified polyolefins suitable for use as compatibilizer are the commercial products Amplify™ TY by The Dow Chemical Company, Exxelor™ by ExxonMobil Chemical Company, Scona® TPPP by Byk (Altana Group), Bondyram® by Polyram Group and Polybond® by Chemtura and combinations thereof.

In one further embodiment, the filled polyolefin composition optionally comprises 0-15% by weight, preferably 0.1-15% by weight, more preferably 0.5-10% by weight, of at least one additive (d) selected from the group consisting of fillers, pigments, nucleating agents, extension oils, flame retardants (e. g. aluminum trihydrate), UV resistants (e. g. titanium dioxide), UV stabilizers, lubricants (e. g., oleamide), antiblocking agents, waxes, and combinations thereof, the amount of the additive (d) being based on the total weight of (a)+(b)+(c)+(d).

In one embodiment, the filled polyolefin composition further comprises at least one polymer (e) selected from the group consisting of:

- propylene homopolymers;
- propylene copolymers with at least one alpha-olefin of formula $CH_2$=CHR, where R is H or a linear or branched C2-C8 alkyl, the copolymer comprising up to and including 12% by weight, based on the weight of (e), of monomer units deriving from the alpha-olefin;
- saturated or unsaturated styrene or alpha-methylstyrene block copolymers, wherein the block copolymer preferably comprises up to and including 30% by weight of polystyrene, preferably from 10 to 30% by weight, more preferably from 15 to 25% by weight, based on the weight of (e);
- ethylene homopolymers;
- ethylene copolymers with at least one alpha-olefin of formula $CH_2$=CHR, where R is a linear or branched C2-C8 alkyl, and
- combinations thereof.

The styrene block copolymer is preferably selected from the group consisting of: polystyrene-polybutadiene-polystyrene (SBS), polystyrene-poly(ethylene-butylene)-polystyrene (SEBS), polystyrene-poly(ethylene-propylene)-polystyrene (SEPS), polystyrene-polyisoprene-polystyrene (SIS), polystyrene-poly(isoprene-butadiene)-polystyrene (SIBS) and mixtures thereof. More preferably the styrene block copolymer is a polystyrene-poly(ethylene-butylene)-polystyrene (SEBS).

Styrene or alpha-methylstyrene block copolymers are generally prepared by ionic polymerization of the relevant monomers and are commercially available under the tradename of Kraton™ marketed by Kraton Polymers.

The ethylene copolymer preferably comprises at least 20% by weight, more preferably from 20 to 50% by weight based on the weight of the polymer (e), of units deriving from the alpha-olefin. The alpha-olefin is preferably selected from butene-1, hexene-1, octene-1 and combinations thereof.

Ethylene copolymers are commercially available under the tradename of Engage, eg. Engage™ 8100 or Engage™ 8150, marketed by Dow® and are prepared using known polymerization processes, such as solution polymerization processes carried out in the presence of a metallocene-based catalyst system.

When present, the amount of the further polymer (e) preferably ranges from 0.5 to 20% by weight, preferably from 3 to 20% by weight, more preferably from 5 to 15% by weight, the amount of the further polymer (e) being based on the total weight of (a)+(b)+(c)+(d)+(e).

The filled polyolefin composition is prepared by metering the components to an extruder, preferably to a twin screw extruder, operated at a temperature comprised in the range from 180° to 280°C.

The filled polyolefin composition of the instant disclosure has good flowability in the molten state having a melt flow rate MFR(tot), measured according to ISO 1133, 230°C, 2.16 kg, equal to or greater than 10 g/10 min., preferably ranging from 10 to 50 g/10 min., more preferably from 12 to 30 g/10 min.

Preferably, the filled polyolefin composition of the present disclosure is endowed with at least one of the following properties:

- flexural modulus, measured according to the method ISO 178:2019, equal to or greater than 2500 MPa, preferably equal to or greater than 2800 MPa. In one embodiment the flexural modulus is equal to or lower than 3500 MPa for each lower limit; and/or
- Vicat A softening temperature, measured according to the method ISO 306 (A/50 N), equal to or greater than 130°C, preferably equal to or greater than 135°C. In one embodiment the Vicat A softening temperature is equal to or lower than 150°C for each lower limit; and/or
- Charpy impact strength (notched, 23°C), measured according to the method ISO 179/1eA, equal to or greater than 25 $kJ/m^2$. In one embodiment, the Charpy impact strength (notched, 23°C) is comprised in the range 25-35 $kJ/m^2$; and/or
- shrinkage 48h/RT equal to or lower than 0.20%, preferably equal to or lower than 0.18% in longitudinal direction and equal to or lower than 0.85% in transverse direction. In one embodiment, the shrinkage 48h/RT in longitudinal and in transverse direction is equal to or great than 0.05% for each upper limit; and/or
- scratch resistance equal to or lower than 0.3. In one embodiment, the scratch resistance is comprised in the range 0-0.3.

The flexural modulus, Vicat A softening temperature and Charpy impact strength were determined on injection molded multipurpose bars obtained according to EN ISO 20753 (Type A1); the shrinkage 48/RT and the scratch resistance were measured according to the methods described in the experimental section on dedicated specimens.

In one preferred embodiment, the filled polyolefin composition is endowed with all the properties above.

The balance of mechanical properties of the filled polyolefin composition renders the filled polyolefin composition suitable for use in producing molded articles, preferably injection molded articles.

A further object of the present disclosure is therefore a process to produce a molded article comprising the steps of:

(I) melt blending the filled polyolefin composition of the present disclosure, thereby forming a molten filled polyolefin composition; and

(II) pushing the molten filled polyolefin composition into the cavity of a mold and solidify the molten filled polyolefin composition inside the cavity.

The process can be carried out using conventional molding apparatuses, in particular an injection molding apparatus.

A further object of the present disclosure is an article, preferably an injection molded article, comprising or consisting of the filled polyolefin composition of the present disclosure, wherein the injection molded article is preferably selected from vehicle interior trims, vehicle exterior trims and under the hood articles.

It should be noted that the features describing the filled polyolefin composition of the present disclosure are not inextricably linked to each other. As a consequence, a certain level of preference of one feature does not necessarily involve the same level of preference of the remaining features of the same or different components. It is intended in the present disclosure that any preferred range of features of components from (a) to (e) from which the filled polyolefin composition is obtained can be combined independently from the level of preference.

## EXAMPLES

The following examples are illustrative only, and are not intended to limit the scope of the disclosure in any manner whatsoever.

### CHARACTERIZATION METHODS

The following methods are used to determine the properties indicated in the description and claims.

**Melt Flow Rate:** Determined according to the method ISO 1133 (230°C, 2.16kg).

**Solubility in xylene at 25°C:** 2.5 g of polymer sample and 250 ml of xylene are introduced in a glass flask equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. The amount of polymer soluble in xylene at 25°C is then calculated. XS(tot) and $XS_A$ values are experimentally determined. The fraction of component (B) soluble in xylene at 25°C ($XS_B$) can be calculated from the formula:

$$XS = W(A)\times(XS_A) + W(B)\times(XS_B)$$

wherein W(A) and W(B) are the relative amounts of components (A) and (B), respectively, and W(A)+ W(B)=1.

**Intrinsic viscosity of the xylene soluble fraction:** to calculate the value of the intrinsic viscosity IV, the flow time of a polymer solution is compared with the flow time of the solvent (THN). A glass capillary viscometer of Ubbelohde type is used. The oven temperature is adjusted to 135°C. Before starting the measurement of the solvent flow time *t0* the temperature must be stable (135° ± 0.2°C). Sample meniscus detection for the viscometer is performed by a photoelectric device.

Sample preparation: 100 ml of the filtered solution (S1) is poured in a beaker and 200 ml of acetone are added under vigorous stirring. Precipitation of insoluble fraction must be complete as evidenced by a clear solid-solution separation. The suspension is filtered on a weighed metallic screen (200 mesh), the beaker is rinsed and the precipitate is washed with

acetone so that the o-xylene is completely removed. The precipitate is dried in a vacuum oven at 70°C until a constant weight is reached. 0.05g of precipitate are weighted and dissolved in 50ml of tetrahydronaphthalene (THN) at a temperature of 135°C. The efflux time t of the sample solution is measured and converted into a value of intrinsic viscosity [η] using Huggins' equation (Huggins, M.L., J. Am. Chem. Soc. 1942, 64, 11, 2716-2718) and the following data:

- concentration (g/dl) of the sample;
- the density of the solvent at a temperature of 135°C;
- the flow time t0 of the solvent at a temperature of 135°C on the same viscometer.

One single polymer solution is used to determine [η].

**Comonomer content:** determined by IR using Fourier Transform Infrared Spectrometer (FTIR). The spectrum of a pressed film of the polymer is recorded in absorbance vs. wavenumbers ($cm^{-1}$). The following measurements are used to calculate ethylene and hexene-1 content:

- Area (At) of the combination absorption bands between 4482 and 3950 $cm^{-1}$ which is used for spectrometric normalization of film thickness;
- a linear baseline is subtracted in the range 790 - 660 $cm^{-1}$ and the remaining constant offset is eliminated;
- the content of ethylene and hexene-1 are obtained by applying a Partial Least Square (PLS1) multivariate regression to the 762 - 688 $cm^{-1}$ range.

The method is calibrated by using polymer standards based on $^{13}C$ NMR analyses.

Sample preparation: Using a hydraulic press, a thick sheet is obtained by pressing about 1g of sample between two aluminum foils. Pressing temperature is 180±10°C (356°F) and about 10 $kg/cm^2$ pressure for about one minute (minimum two pressing operations for each specimen). A small portion is cut from this sheet to mold a film. Recommended film thickness ranges between 0.02-0.05 cm.

**HDT A:** measured according to the method ISO 75/A (1.8 MPa).

**Flexural modulus:** Determined according to the method ISO 178:2019.

**Tensile strength and elongation:** Determined according to the method ISO 527-1,-2.

**Vicat A softening temperature:** Determined according to the method ISO 306 (A/50N).

**Charpy impact strength test at 23°C:** measured according to ISO 179/1eA 2010.

**Preparation of compression molded plaques:** obtained according to ISO 8986-2:2009.

**Shore A and D on compression molded plaques:** Determined according to the method ISO 868 (15 sec).

**Thermal shrinkage:** a plaque of 195 x 100 x 2.5 mm is molded in an injection molding machine Krauss Maffei KM250/1000C2 (250 tons of claiming force) under the following injection molding conditions:

- melt temperature: 220°C;
- mould temperature: 35°C;
- injection time: 3.6 s;
- holding time: 30 s;
- screw diameter: 55 mm

The plaque is stored under normal conditions and measured with a callipers 48h after molding. The shrinkage is calculated from the following formulas:

$$\text{longitudinal shrinkage} = [(195 - L)/195] \times 100$$

$$\text{transversal shrinkage} = [(100 - T)/100] \times 100$$

wherein

195 and L are respectively the dimension of the mould and the measured dimensions of the plaque along the flow direction, in mm; and

100 and T are respectively the dimension of the mould and the measured dimensions of the plaque crosswise the flow direction, in mm.

**Scratch resistance:** measured according to the test specification WV PV 3952 (2021-03) on sample, cut out of out of a DIN A5 dimension grained with K85 type grain injection molded, using a loading weight of 10N.

**Preparation of HECO1**

The component (a) of the filled polyolefin composition is prepared by a polymerization process carried out in two gas phase reactors connected in series and equipped with devices to transfer the product from the first to the second reactor. A Ziegler-Natta catalyst system is used comprising:

- a titanium-containing solid catalyst component prepared with the procedure described in EP395083, Example 3, according to which di-isobutyl phthalate is used as internal electron donor compound;
- triethylaluminium (TEAL) as co-catalyst;
- Dicyclopentyl dimethoxy silane (DCPMS) as external electron donor.

The solid catalyst component is contacted with TEAL and DCPMS in a pre-contacting vessel, with a weight ratio of TEAL to the solid catalyst component of 4÷5. The weight ratio TEAL/DCPMS is 10.

The catalyst system is then subjected to pre-polymerization by maintaining it in suspension in liquid propylene at 20°C for about 30-32 minutes before introducing it into the first polymerization reactor.

Propylene copolymer (A1) is produced into the first gas phase reactor by feeding in a continuous and constant flow the pre-polymerized catalyst system, hydrogen (used as molecular weight regulator), propylene and hexene-1, all in gaseous phase.

The propylene copolymer (A1) coming from the first reactor is discharged in a continuous flow and, after having been purged of unreacted monomers, is introduced, in a continuous flow, into the second gas phase reactor, together with quantitatively constant flows of propylene, ethylene and hydrogen, all in the gas state. In the second reactor the propylene copolymer (B1) is produced.

The polymerization conditions, molar ratio of the reactants and composition of the copolymer obtained are shown in Table 1.

Table 1

| **GPR 1 - component A1** | | |
|---|---|---|
| Temperature | °C | 60 |
| Pressure | barg | 16 |
| $H_2/C_3$- | mol. | 0.04 |
| $C_6$-/($C_6$- + $C_3$-) | mol | 0.03 |
| **Split** | **wt%** | **21** |
| Xylene soluble of A1 XS(A1) | wt% | 6.8 |
| MFR of A1 MFR(A1) | g/10 min. | 26 |
| $C_6$- content of A1 | wt% | 3.7 |
| **GPR 2** - **component B1** | | |
| Temperature | °C | 55 |
| Pressure | barg | 16 |
| $H_2/C_2$- | mol. | 0.05 |
| $C_2$-/($C_2$- + $C_3$-) | mol. | 0.15 |
| **Split** | **wt%** | **79** |
| $C_2$- content of B1 (*) | wt% | 27 |
| $C_2$- content of (A1+ B1) | wt% | 19.7 |
| MFR of (A1 + B1) | g/10 min. | 0.27 |
| Notes to table 1: C2- = ethylene in gas phase (IR); C3- = propylene in gas phase (IR); C6- = hexene-1 in gas phase (IR); split = amount of polymer produced in the concerned reactor. (*) indicates a calculated value. | | |

The polymer particles exiting the second reactor are subjected to a steam treatment to remove the unreacted monomers and volatile compounds, and then dried.

The heterophasic polypropylene HECO1 was prepared by mixing the polymer particles exiting the degassing section of the reactor with the additives (C) and an organic peroxide in the amounts indicated in Table 2, in a twin screw extruder Berstorff ZE 25 (length/diameter ratio of screws: 34) and extruded under nitrogen atmosphere in the following conditions:

- rotation speed: 260 rpm;
- extruder output: 18 kg/hour;
- temperature profile: 160 / 200 / 200 / 210 / 220
- melt temperature: 233°C.

Table 2

| | wt.% |
|---|---|
| Polymer particles | 99.705 |
| Ca stearate | 0.05 |
| Irganox 1010 | 0.05 |
| Irgafos 168 | 0.1 |
| Peroxan HX | 0.095 |

Irganox® 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate; Irgafos® 168 is tris(2,4-di-tert.-butylphenyl)phosphite; Peroxan HX supplied by Pergan is 2,5-dimethyl-2,5-di-(tert-butylperoxy)-hexane.

The properties of the thus obtained heterophasic polypropylene HECO1 are reported in Table 3.

Table 3

| | | **HECO1** |
|---|---|---|
| MFR | g/10min | 14.7 |
| XS(1) | % | 69 |
| XSIV(1) | dl/g | 1.47 |
| Shore A | | 88 |
| Shore D | | 27 |

**Further components**

HECO2.1: an heterophasic polypropylene comprising 88 wt.% of a propylene-ethylene copolymer (A2.1) containing 5.3 wt.%, based on the weight of copolymer (A2.1) of units deriving from ethylene and 12 wt.% of a propylene-ethylene copolymer (B2.1) containing 44 wt.%, based on the weight of copolymer (B2.1), of units deriving from ethylene, the amounts of (A2.1) and (B2.1) being based on the total weight of (A2.1)+(B2.1).

The HECO2.1 has MFR(2) of 100 g/10 min. (ISO1133, 230°C/2.16 Kg), flexural modulus of 1200 MPa (ISO 178:2019), tensile stress at yield of 30 MPa (ISO 527-1,-2), tensile strain at yield of 7% (ISO 527-1,-2), Charpy impact strength - notched at 23°C (ISO 179, 1eA) of 2.5 kJ/$m^2$ and Vicat softening temperature of 152°C (ISO 306, A50); HECO2.2: an heterophasic polypropylene comprising 82.5 wt.% of a propylene-ethylene copolymer (A2.2) containing 7.7 wt.%, based on the weight of the copolymer (A2.2), of units deriving from ethylene and 17.5 wt.% of a propylene ethylene copolymer (B2.2) containing 44 wt.%, based on the weight of the copolymer (B2.2), of units deriving from ethylene, wherein the amounts of (A2.2) and (B2.2) are based on the total weight of (A2.2)+(B2.2).

The HECO2.2 has MFR(2) of 100 g/10 min. (ISO1133, 230°C/2.16 Kg), tensile modulus of 1200 MPa (ISO 527-1,-2), tensile stress at yield of 26 MPa (ISO 527-1,-2), tensile strain at yield of 6% (ISO 527-1,-2), Charpy impact strength - notched at 23°C (ISO 179, 1eA) of 5.0 kJ/$m^2$ and Vicat softening temperature of 149°C (ISO 306, A50);

ECS 03 T497: E-glass fibers (chopped strands) supplied by Nippon Electric Glass Co., Ltd. having filament diameter of 13.0 μm and strand length of 3.0 mm;

ChopVantage® HP3270: chopped strands glass fibers silene sized marketed by Nippon Electric Glass having fiber diameter of 10 μm and 4.5 mm length;
Exxelor PO 1020: a propylene homopolymer grafted with maleic anhydride supplied by ExxonMobil, having an MA grafting level in the range of 0.5-1.0 wt.%;
BK MB: a polypropylene masterbatch comprising 40 wt.% of carbon black (ASTM D1603) and *Moplen* EP548S supplied by LyondellBasell as carrier;
Premix: a mixture of additives commonly used in the polyolefin field comprising inorganic oxides, antioxidants, pigments and 15.8 wt.% (with respect to the premix) of *Moplen* HF501N, marketed by LyondellBasell, as carrier for the additives.

**Examples E1-E2**

The filled polyolefin compositions having the composition indicated in table 4 are prepared by mixing the components in a 40mm Werner & Pfleiderer extruder (L/D of 48) operated under the following extruding conditions:

| | |
|---|---|
| - rotation speed: | 300 rpm; |
| - temperature profile: | 190 / 200 / 200 / 200 / 200 / 200. |
| - melt temperature: | 245°-250°C. |

The compositions are tested for physical and mechanical properties on multipurpose bars obtained by injection molding according to the method EN ISO 20753 (Type A1) and the test results are reported in the same table 4.

**Comparative example CE3**

In the same table 4 the test results are compared with the data reported in table 2 of WO2015/000738 for Ref. 2. The composition of Ref. 2 of WO2015/000738 comprises:
- 29.8 wt.% of a polymer named HECO2 comprising a 21 wt.% of a propylene copolymer containing 3.25 wt.% of ethylene, 49.5 wt.% of a propylene/ethylene copolymer containing 28 wt.% of ethylene and 29.5 wt.% of a second propylene/ethylene copolymer containing 38 wt.% of ethylene, the polymer having MFR of 2.8 g/10 min. (ISO1133, 230°C/2.16 Kg);
- 38 wt.% of a polymer named HECO3 being an heterophasic polyolefin comprising 55 wt.% of a propylene homopolymer and 45 wt.% of a propylene/ethylene copolymer containing 12 wt.% of ethylene and having MFR of 18 g/10 min. (ISO1133, 230°C/2.16 Kg);
- 15 wt.% of a propylene homopolymer having MFR of 1800 g/10 min. (ISO1133, 230°C/2.16 Kg);
- 12 wt.% of glass fibers;
- 1 wt.% of polypropylene grafted with maleic anhydride
- 6 wt.% of additive pack.

Table 4

| | | E1 | E2 | CE3 |
|---|---|---|---|---|
| HECO1 | wt.% | 40 | 40 | / |
| HECO2.1 | wt.% | 25.9 | / | |
| HECO2.2 | wt.% | / | 25.9 | |
| ECS 03 T497 | wt.% | 25 | 25 | |
| Exxelor PO 1020 | wt.% | 1 | 1 | |
| BK MB | wt.% | 2.6 | 2.6 | |
| Premix | wt.% | 5.5 | 5.5 | |
| | | | | |
| MFR | g/10min | 14.8 | 15.0 | 11.6 |
| HDT A | °C | 88.0 | 84.1 | 94.9 |
| Vicat A (A/50 N) | °C | 136.4 | 133.0 | / |
| Tensile strength at yield | MPa | 37.6 | 31.6 | / |

(continued)

| | | E1 | E2 | CE3 |
|---|---|---|---|---|
| Elongation at break | % | 14 | 16 | / |
| Flexural modulus | MPa | 2841 | 2589 | 2260 |
| Charpy impact notched at 23°C | $kJ/m^2$ | 26.5 | 31.6 | 16.6 |
| Shrinkage (48h at 23°C) | | | | |
| long. | % | 0.17 | 0.14 | 0.33 |
| transv. | % | 0.78 | 0.80 | 0.78 |

**Examples E4-E5**

The filled polyolefin compositions having the composition indicated in table 5 are prepared by mixing the components in a 40mm Werner & Pfleiderer extruder (L/D of 48) extruder under the same extruding conditions used for examples E1-E2.

The compositions are tested for physical and mechanical properties on multipurpose bars obtained by injection molding according to the method EN ISO 20753 (Type A1) and the test results are reported in the same table 5.

Table 5

| | | E4 | E5 |
|---|---|---|---|
| HECO1 | wt.% | 27 | 27 |
| HECO2.1 | wt.% | 42.9 | / |
| HECO2.2 | wt.% | / | 42.9 |
| ChopVantage HP 3270 | wt.% | 13 | 13 |
| Exxelor PO 1020 | wt.% | 1 | 1 |
| Kraton G1657 | wt.% | 7 | 7 |
| BK MB | wt.% | 3.4 | 3.4 |
| Premix | wt.% | 5.7 | 5.7 |
| | | | |
| MFR | g/10min | 21.0 | 20.8 |
| HDT A | °C | 80.8 | 76.3 |
| Vicat A | °C | 140 | 134 |
| Tensile strength at yield | MPa | 31.8 | 29.4 |
| Elongation at break | % | 12 | 14 |
| Flexural modulus | MPa | 1970 | 1751 |
| Charpy impact notched at 23°C | $kJ/m^2$ | 17.3 | 22.9 |
| Shrinkage (48h at 23°C) | | | |
| long. | % | 0.31 | 0.27 |
| transv. | % | 0.82 | 0.81 |
| Scratch resistance | | 0.1 | / |

## Claims

**1.** A filled polymer composition comprising:

(a) 65-90% by weight of a polyolefin blend comprising:

(i) 30-70% by weight of a first heterophasic polypropylene HECO1 comprising:

(A1) 10-40% by weight of a copolymer of propylene with hexene-1 comprising 1.0-6.0% by weight, based on the weight of (A1), of units deriving from hexene-1 and having melt flow rate MFR(A1) measured according to ISO 1133, 230°C, 2.16 kg, equal to or greater than 20 g/10 min; and
(B1) 60-90% by weight of a copolymer of propylene with at least one alpha-olefin of formula $CH_2$=CHR, and optionally a diene, where R is H or a linear or branched C2-C8 alkyl, the copolymer comprising 20-35% by weight, based on the weight of (B1), of monomer units deriving from the alpha-olefin, wherein

- the heterophasic polypropylene HECO1 comprises an amount of fraction soluble in xylene (XS1) at 25°C equal to or higher than 65% by weight, and
- the amounts of (A1), (B1) and XS1 are based on the total weight of (A1)+(B1);

(ii) 70-30% by weight of a second heterophasic polypropylene HECO2 having melt flow rate MFR(2), measured according to ISO 1133, 230°C, 2.16 kg, equal to or greater than 80 g/10 min. and comprising:

(A2) 75-90% by weight of a propylene homopolymer or a propylene copolymer with at least one alpha-olefin of formula $CH_2$=CHR, where R is H or a linear or branched C2-C8 alkyl, the copolymer comprising up to and including 10% by weight, based on the weight of (A2), of monomer units deriving from the alpha-olefin; and
(B2) 10-25% by weight of a of a copolymer of propylene with at least one alpha-olefin of formula $CH_2$=CHR, and optionally a diene, where R is H or a linear or branched C2-C8 alkyl, the copolymer comprising 30-60% by weight, based on the weight of (B2), of monomer units deriving from the alpha-olefin,
wherein the amounts of (A2) and (B2) are based on the total weight of (A2)+(B2), and

wherein the amounts of HECO1 and HECO2 are based on the total weight of HECO1+HECO2;

(b) 10-35% by weight of glass fibers; and
(c) 0-5% by weight of a compatibilizer,

wherein the amounts of (a), (b) and (c) are based on the total weight of (a)+(b)+(c).

**2.** The filled polyolefin composition of claim 1, wherein the propylene copolymer (A1) of the heterophasic polypropylene HECO1 comprises 2.0-5.0% by weight, preferably 2.8-4.8% by weight, more preferably 3.0-4.0% by weight, based on the weight of component (A1), of hexene-1.

**3.** The filled polyolefin composition of claim 1 or 2, wherein the first heterophasic polypropylene HECO1 has melt flow rate MFR(1), measured according to ISO 1133, 230°C, 2.16 kg, ranging from 5 to 50 g/10 min., preferably from 10 to 30 g/10 min., more preferably from 12 to 25 g/10.min.

**4.** The filled polyolefin composition according to claim 3, wherein the melt flow rate value MFR(1) is obtained by visbreaking the heterophasic polypropylene obtained from the polymerization reaction.

**5.** The filled polyolefin composition according to any one of claims 1-4, wherein the intrinsic viscosity of the fraction soluble in xylene XSIV(1) of the first heterophasic polypropylene HECO1 is equal to or lower than 1.5 dl/g.

**6.** The filled polyolefin composition according to any one of claims 1-5, wherein the heterophasic polypropylene HECO2 has melt flow rate MFR(2) measured according to ISO 1133, 230°C, 2.16 kg ranging from 80 to 150 g/10 min., more preferably from 90 to 120 g/10 min.

**7.** The filled polyolefin composition according to any one of claims 1-6, wherein the glass fibers (b) have diameter of up to and including 50 μm, preferably ranging from 5 to 20 μm, more preferably from 8 to 15 μm and length equal to or lower than 10 mm, preferably ranging from 0.1 to 10 mm, more preferably from 1 to 8 mm, more preferably from 2 to 6 mm.

**8.** The filled polyolefin composition according to any one of claims 1-7, wherein the compatibilizer (c) is a polyolefin selected from polyethylenes, polypropylenes and mixtures thereof, functionalized with a compound selected from the group consisting of maleic anhydride, C1-C10 linear or branched dialkyl maleates, C1-C10 linear or branched dialkyl fumarates, itaconic anhydride, C1-C10 linear or branched itaconic acid, dialkyl esters, maleic acid, fumaric acid, itaconic acid and mixtures thereof.

**9.** The filled polyolefin composition according to any one of claims 1-8, comprising 0-15% by weight, preferably 0.1-15% by weight, more preferably 0.5-10% by weight, of at least one additive (d) selected from the group consisting of fillers, pigments, nucleating agents, extension oils, flame retardants, UV resistants, UV stabilizers, lubricants, antiblocking agents, waxes, and combinations thereof, the amount of the additive (d) being based on the total weight of (a)+(b)+(c)+(d).

**10.** The filled polyolefin composition according to any one of claims 1-9, further comprising from 0.5 to 20% by weight, preferably from 3 to 20% by weight, more preferably from 5 to 15% by weight, of at least one further polymer (e) selected from the group consisting of:

- propylene homopolymers,
- propylene copolymers with at least one alpha-olefin of formula $CH_2$=CHR, where R is H or a linear or branched C2-C8 alkyl, the copolymer comprising up to and including 12% by weight, based on the weight of component (e), of monomer units deriving from the alpha-olefin,
- saturated or unsaturated styrene or alpha-methylstyrene block copolymers, wherein the block copolymer preferably comprises up to and including 30% by weight, based on the weight of (e), of polystyrene,
- ethylene homopolymers,
- ethylene copolymers with at least one alpha-olefin of formula $CH_2$=CHR, where R is a linear or branched C2-C8 alkyl, and
- combinations thereof,

wherein the amount of the at least one further polymer (e) is based on the total weight of (a)+(b)+(c)+(d)+(e).

**11.** The filled polyolefin composition according to any-one of claims 1-10 having melt flow rate MFR(tot), measured according to ISO 1133, 230°C, 2.16 kg, equal to or greater than 10 g/10 min., preferably ranging from 10 to 50 g/10 min., more preferably from 12 to 30 g/10 min.

**12.** Use of the filled polyolefin composition according to any one of claims 1-11 to obtain molded articles, preferably injection molded articles.

**13.** A process to produce a molded article comprising the steps of:

(I) melt blending the filled polyolefin composition as described in any one of claims 1-11, thereby forming a molten filled polyolefin composition; and
(II) pushing the molten filled polyolefin composition into the cavity of a mold and solidify the molten filled polyolefin composition inside the cavity.

**14.** An article, preferably an injection molded article, comprising the polyolefin composition according to any one of claims 1-11.

**15.** The article according to claim 14, wherein the article is an injection molded article selected from vehicle interior trims, vehicle exterior trims and under the hood articles.

**Patentansprüche**

**1.** Gefüllte Polymerzusammensetzung, umfassend:

(a) 65 bis 90 Gew.% eines Polyolefingemisches, umfassend:

(i) 30 bis 70 Gew.% eines ersten heterophasischen Polypropylens HECO1, umfassend:

(A1) 10 bis 40 Gew.% eines Copolymers von Propylen mit Hexen-1, umfassend 1,0 bis 6,0 Gew.%, bezogen auf das Gewicht von (A1), von Einheiten, die von Hexen-1 abgeleitet sind, und mit einer Schmelzflussrate MFR(A1), gemessen gemäß ISO 1133, 230 °C, 2,16 kg, gleich oder größer als 20 g/10 min; und
(B1) 60 bis 90 Gew.% eines Copolymers von Propylen mit mindestens einem alpha-Olefin der Formel $CH_2$=CHR, und gegebenenfalls einem Dien, wobei R H oder ein lineares oder verzweigtes $C_2$- bis $C_8$-Alkyl ist, wobei das Copolymer 20 bis 35 Gew.%, bezogen auf das Gewicht von (B1), von Monomereinheiten umfasst, die von dem alpha-Olefin abgeleitet sind,
wobei

- das heterophasische Polypropylen HECO1 eine Menge einer in Xylol bei 25 °C löslichen Fraktion (XS1) gleich oder größer als 65 Gew.% umfasst, und
- die Mengen an (A1), (B1) und XS1 sich auf das Gesamtgewicht von (A1) + (B1) beziehen;

(ii) 70 bis 30 Gew.% eines zweiten heterophasischen Polypropylens HECO2 mit einer Schmelzflussrate MFR(2), gemessen gemäß ISO 1133, 230 °C, 2,16 kg, gleich oder größer als 80 g/10 min und umfassend:

(A2) 75 bis 90 Gew.% eines Propylenhomopolymers oder eines Propylencopolymers mit mindestens einem alpha-Olefin der Formel $CH_2$=CHR, wobei R H oder ein lineares oder verzweigtes $C_2$- bis $C_8$-Alkyl ist, wobei das Copolymer bis zu und einschließlich 10 Gew.%, bezogen auf das Gewicht von (A2), von Monomereinheiten umfasst, die von dem alpha-Olefin abgeleitet sind; und
(B2) 10 bis 25 Gew.% eines Copolymers von Propylen mit mindestens einem alpha-Olefin der Formel $CH_2$=CHR, und gegebenenfalls einem Dien, wobei R H oder ein lineares oder verzweigtes $C_2$- bis $C_8$-Alkyl ist, wobei das Copolymer 30 bis 60 Gew.%, bezogen auf das Gewicht von (B2), von Monomereinheiten umfasst, die von dem alpha-Olefin abgeleitet sind,
wobei die Mengen von (A2) und (B2) sich auf das Gesamtgewicht von (A2) + (B2) beziehen, und

wobei die Mengen an HECO1 und HECO2 sich auf das Gesamtgewicht von HECO1 + HECO2 beziehen;

(b) 10 bis 35 Gew.% Glasfasern; und
(c) 0 bis 5 Gew.% eines Verträglichmachers,
wobei die Mengen von (a), (b) und (c) sich auf das Gesamtgewicht von (a) + (b) + (c) beziehen.

**2.** Gefüllte Polyolefinzusammensetzung nach Anspruch 1, wobei das Propylencopolymer (A1) des heterophasischen Polypropylens HECO1 2,0 bis 5,0 Gew.%, vorzugsweise 2,8 bis 4,8 Gew.%, bevorzugter 3,0 bis 4,0 Gew.%, bezogen auf das Gewicht der Komponente (A1), von Hexen-1 umfasst.

**3.** Gefüllte Polyolefinzusammensetzung nach Anspruch 1 oder 2, wobei das erste heterophasische Polypropylen HECO1 eine Schmelzflussrate MFR(1), gemessen gemäß ISO 1133, 230 °C, 2,16 kg, im Bereich von 5 bis 50 g/10 min, vorzugsweise 10 bis 30 g/10 min, bevorzugter 12 bis 25 g/10 min hat.

**4.** Gefüllte Polyolefinzusammensetzung nach Anspruch 3, wobei der Wert der Schmelzflussrate MFR(1) durch Viskositätsbrechen (Visbreaking) des aus der Polymerisationsreaktion erhaltenen heterophasischen Polypropylens erhalten wird.

**5.** Gefüllte Polyolefinzusammensetzung nach einem der Ansprüche 1 bis 4, wobei die Grenzviskosität der in Xylol löslichen Fraktion XSIV(1) des ersten heterophasischen Polypropylens HECO1 gleich oder kleiner als 1,5 dl/g ist.

**6.** Gefüllte Polyolefinzusammensetzung nach einem der Ansprüche 1 bis 5, wobei das heterophasische Polypropylen HECO2 eine Schmelzflussrate MFR(2), gemessen gemäß ISO 1133, 230 °C, 2,16 kg, im Bereich von 80 bis 150 g/10 min, bevorzugter 90 bis 120 g/10 min hat.

**7.** Gefüllte Polyolefinzusammensetzung nach einem der Ansprüche 1 bis 6, wobei die Glasfasern (b) einen Durchmesser bis zu und einschließlich 50 μm, vorzugsweise im Bereich von 5 bis 20 μm, bevorzugter von 8 bis 15 μm, und eine Länge gleich oder kleiner als 10 mm, vorzugsweise im Bereich von 0,1 bis 10 mm, bevorzugter 1 bis 8 mm, bevorzugter 2 bis 6 mm haben.

**8.** Gefüllte Polyolefinzusammensetzung nach einem der Ansprüche 1 bis 7, wobei der Verträglichmacher (c) ein

Polyolefin ausgewählt aus Polyethylenen, Polypropylenen und Mischungen davon ist, funktionalisiert mit einer Verbindung ausgewählt aus der Gruppe bestehend aus Maleinsäureanhydrid, linearen oder verzweigten $C_1$- bis $C_{10}$-Dialkylmaleaten, linearen oder verzweigten $C_1$- bis $C_{10}$-Dialkylfumaraten, Itaconsäureanhydrid, linearer oder verzweigter $C_1$- bis $C_{10}$-Itaconsäure, Dialkylestern, Maleinsäure, Fumarsäure, Itaconsäure und Mischungen davon.

**9.** Gefüllte Polyolefinzusammensetzung nach einem der Ansprüche 1 bis 8, umfassend 0 bis 15 Gew.%, vorzugsweise 0,1 bis 15 Gew.%, bevorzugter 0,5 bis 10 Gew.% von mindestens einem Additiv (d) ausgewählt aus der Gruppe bestehend aus Füllstoffen, Pigmenten, Nukleierungsmitteln, Streckölen, Flammverzögerern, UV-Resistenzmitteln, UV-Stabilisatoren, Schmiermitteln, Antiblockiermitteln, Wachsen und Kombinationen davon, wobei die Menge des Additivs (d) sich auf das Gesamtgewicht von (a) + (b) + (c) + (d) bezieht.

**10.** Gefüllte Polyolefinzusammensetzung nach einem der Ansprüche 1 bis 9, des Weiteren umfassend 0,5 bis 20 Gew.%, vorzugsweise 3 bis 20 Gew.%, bevorzugter 5 bis 15 Gew.% von mindestens einem weiteren Polymer (e) ausgewählt aus der Gruppe bestehend aus:

- Propylenhomopolymeren,
- Propylencopolymeren mit mindestens einem alpha-Olefin der Formel $CH_2$=CHR, wobei R H oder ein lineares oder verzweigtes $C_2$- bis $C_8$-Alkyl ist, wobei das Copolymer bis zu und einschließlich 12 Gew.%, bezogen auf das Gewicht der Komponente (e), von Monomereinheiten umfasst, die von dem alpha-Olefin abgeleitet sind;
- gesättigten oder ungesättigten Styrol- oder alpha-Methylstyrol-Blockcopolymeren, wobei das Blockcopolymer vorzugsweise bis zu und einschließlich 30 Gew.%, bezogen auf das Gewicht von (e), von Polystyrol umfasst,
- Ethylenhomopolymeren,
- Ethylencopolymeren mit mindestens einem alpha-Olefin der Formel $CH_2$=CHR, wobei R ein lineares oder verzweigtes $C_2$- bis $C_8$-Alkyl ist, und
- Kombinationen davon,

wobei die Menge des mindestens einen weiteren Polymers (e) auf dem Gesamtgewicht von (a) + (b) + (c) + (d) + (e) basiert.

**11.** Gefüllte Polyolefinzusammensetzung nach einem der Ansprüche 1 bis 10 mit einer Schmelzflussrate MFR(gesamt), gemessen gemäß ISO 1133, 230 °C, 2,16 kg, gleich oder größer als 10 g/10 min, vorzugsweise im Bereich von 10 bis 50 g/10 min, bevorzugter 12 bis 30 g/10 min.

**12.** Verwendung der gefüllten Polyolefinzusammensetzung nach einem der Ansprüche 1 bis 11 zum Erhalten von Formartikeln, vorzugsweise spritzgegossenen Artikeln.

**13.** Prozess zur Produktion eines Formartikels, umfassend die Schritte:

(I) Schmelzmischen der gefüllten Polyolefinzusammensetzung, wie in einem der Ansprüche 1 bis 11 beschrieben, wodurch eine geschmolzene gefüllte Polyolefinzusammensetzung gebildet wird; und
(II) Drücken der geschmolzenen gefüllten Polyolefinzusammensetzung in den Hohlraum eines Formwerkzeugs und Verfestigen der geschmolzenen gefüllten Polyolefinzusammensetzung innerhalb des Hohlraums.

**14.** Artikel, vorzugsweise ein spritzgegossener Artikel, umfassend die Polyolefinzusammensetzung gemäß einem der Ansprüche 1 bis 11.

**15.** Artikel nach Anspruch 14, wobei der Artikel ein spritzgegossener Artikel ausgewählt aus Fahrzeuginnenverkleidungsteilen, Fahrzeugaußenverkleidungsteilen und Artikeln unter der Motorhaube ist.

## Revendications

**1.** Composition polymère chargée comprenant :

(a) 65 à 90 % en poids d'un mélange de polyoléfines comprenant :

(i) 30 à 70 % en poids d'un premier polypropylène hétérophasique HECO1 comprenant :

(A1) 10 à 40 % en poids d'un copolymère de propylène et d'hexène-1 comprenant 1,0 à 6,0 % en poids, sur la base du poids de (A1), de motifs dérivant de l'hexène-1 et présentant un indice de fluidité à chaud MFR(A1), mesuré selon la norme ISO 1133, 230 °C, 2,16 kg, égal ou supérieur à 20 g/10 min ; et
(B1) 60 à 90 % en poids d'un copolymère de propylène et d'au moins une alpha-oléfine de formule $CH_2$=CHR et éventuellement d'un diène, où R représente H ou C2-C8-alkyle linéaire ou ramifié, le copolymère comprenant 20 à 35 % en poids, sur la base du poids de (B1), de motifs monomères dérivant de l'alpha-oléfine,
- le polypropylène hétérophasique HECO1 comprenant une quantité de fraction soluble dans le xylène (XS1) à 25 °C égale ou supérieure à 65 % en poids et
- les quantités de (A1), (B1) et XS1 étant basées sur le poids total de (A1)(B1) ;

(ii) 70 à 30 % en poids d'un second polypropylène hétérophasique HECO2 présentant un indice de fluidité à chaud MFR(2), mesuré selon la norme ISO 1133, 230 °C, 2,16 kg, égal ou supérieur à 80 g/10 min et comprenant :

(A2) 75 à 90 % en poids d'un homopolymère de propylène ou d'un copolymère de propylène et d'au moins une alpha-oléfine de formule $CH_2$=CHR, où R représente H ou C2-C8-alkyle linéaire ou ramifié, le copolymère comprenant jusqu'à et y compris 10 % en poids, sur la base du poids de (A2), de motifs monomères dérivant de l'alpha-oléfine ; et
(B2) 10 à 25 % en poids d'un copolymère de propylène et d'au moins une alpha-oléfine de formule $CH_2$=CHR et éventuellement d'un diène, où R représente H ou C2-C8-alkyle linéaire ou ramifié, le copolymère comprenant 30 à 60 % en poids, sur la base du poids de (B2), de motifs monomères dérivant de l'alpha-oléfine,
les quantités de (A2) et de (B2) étant basées sur le poids total de (A2)+(B2) et les quantités de HECO1 et de HECO2 étant basées sur le poids total de HECO1+HECO2 ;

(b) 10 à 35 % en poids de fibres de verre ; et
(c) 0 à 5 % en poids d'un agent de compatibilité,

les quantités de (a), (b) et (c) étant basées sur le poids total de (a)+(b)+(c).

**2.** Composition polyoléfinique chargée selon la revendication 1, le copolymère de propylène (A1) du polypropylène hétérophasique HECO1 comprenant 2,0 à 5,0 % en poids, de préférence 2,8 à 4,8 % en poids, plus préférablement 3,0 à 4,0 % en poids, sur la base du poids du constituant (A1), d'hexène-1.

**3.** Composition polyoléfinique chargée selon la revendication 1 ou 2, le premier polypropylène hétérophasique HECO1 présentant un indice de fluidité à chaud MFR(1), mesuré selon la norme ISO 1133, 230 °C, 2,16 kg, situé dans la plage de 5 à 50 g/10 min, de préférence de 10 à 30 g/10 min, plus préférablement de 12 à 25 g/10 min.

**4.** Composition polyoléfinique chargée selon la revendication 3, la valeur de l'indice de fluidité à chaud MFR(1) étant obtenue par viscoréduction du polypropylène hétérophasique obtenu à partir de la réaction de polymérisation.

**5.** Composition polyoléfinique chargée selon l'une quelconque des revendications 1 à 4, la viscosité intrinsèque de la fraction soluble dans le xylène XSIV(1) du premier polypropylène hétérophasique HECO1 étant égale ou inférieure à 1,5 dl/g.

**6.** Composition polyoléfinique chargée selon l'une quelconque des revendications 1 à 5, le polypropylène hétérophasique HECO2 présentant un indice de fluidité à chaud MFR(2), mesuré selon la norme ISO 1133, 230 °C, 2,16 kg, situé dans la plage de 80 à 150 g/10 min, plus préférablement de 90 à 120 g/10 min.

**7.** Composition polyoléfinique chargée selon l'une quelconque des revendications 1 à 6, les fibres de verre (b) présentant un diamètre de jusqu'à et y compris 50 $\mu$m, de préférence situé dans la plage de 5 à 20 $\mu$m, plus préférablement de 8 à 15 $\mu$m et une longueur inférieure ou égale à 10 mm, de préférence située dans la plage de 0,1 à 10 mm, plus préférablement de 1 à 8 mm, plus préférablement de 2 à 6 MM.

**8.** Composition polyoléfinique chargée selon l'une quelconque des revendications 1 à 7, l'agent de compatibilité (c) étant une polyoléfine choisie parmi les polyéthylènes, les polypropylènes et leurs mélanges, fonctionnalisée par un composé choisi dans le groupe constitué par l'anhydride maléique, les maléates de C1-C10-dialkyle linéaire ou

ramifié, les fumarates de C1-C10-dialkyle linéaire ou ramifié, l'anhydride itaconique, les esters dialytiques linéaires ou ramifiés en C1-C10 de l'acide itaconique, l'acide maléique, l'acide fumarique, l'acide itaconique et leurs mélanges.

**9.** Composition polyoléfinique chargée selon l'une quelconque des revendications 1 à 8, comprenant 0 à 15 % en poids, de préférence 0,1 à 15 % en poids, plus préférablement 0,5 à 10 % en poids, d'au moins un additif (d) choisi dans le groupe constitué par les charges, les pigments, les agents de nucléation, les huiles d'extension, les agents ignifuges, les agents de résistance aux UV, les stabilisants aux UV, les lubrifiants, les agents antiadhérents, les cires et leurs combinaisons, la quantité de l'additif (d) étant basée sur le poids total de (a)+(b)+(c)+(d).

**10.** Composition polyoléfinique chargée selon l'une quelconque des revendications 1 à 9, comprenant en outre 0,5 à 20 % en poids, de préférence 3 à 20 % en poids, plus préférablement 5 à 15 % en poids, d'au moins un autre polymère (e) choisi dans le groupe constitué par :

- les homopolymères de propylène,
- les copolymères de propylène et d'au moins une alpha-oléfine de formule $CH_2$=CHR, où R représente H ou C2-C8-alkyle linéaire ou ramifié, le copolymère comprenant jusqu'à et y compris 12 % en poids, sur la base du poids du constituant (e), de motifs monomères dérivant de l'alpha-oléfine,
- les copolymères à blocs, saturés ou insaturés de styrène ou d'alpha-méthyl styrène, le copolymère à blocs comprenant de préférence jusqu'à et y compris 30 % en poids, sur la base du poids de (e), de polystyrène,
- les homopolymères d'éthylène,
- les copolymères d'éthylène et d'au moins une alpha-oléfine de formule $CH_2$=CHR, où R représente C2-C8-alkyle linéaire ou ramifié et
- leurs combinaisons,

la quantité dudit au moins un autre polymère (e) étant basée sur le poids total de (a)+(b)+(c)+(d)+(e).

**11.** Composition polyoléfinique chargée selon l'une quelconque des revendications 1 à 10 présentant un indice de fluidité à chaud MFR(tôt), mesuré selon la norme ISO 1133, 230 °C, 2,16 kg, égal ou supérieur à 10 g/10 min, de préférence situé dans la plage de 10 à 50 g/10 min, plus préférablement de 12 à 30 g/10 min.

**12.** Utilisation de la composition polyoléfinique chargée selon l'une quelconque des revendications 1 à 11 en vue d'obtenir des articles moulés, de préférence des articles moulés par injection.

**13.** Procédé de production d'un article moulé comprenant les étapes de :

(I) mélange à l'état fondu de la composition polyoléfinique chargée telle que décrite dans l'une quelconque des revendications 1 à 11, formant ainsi une composition polyoléfinique chargée fondue ; et
(II) poussage de la composition polyoléfinique chargée fondue dans la cavité d'un moule et solidification de la composition polyoléfinique chargée fondue à l'intérieur de la cavité.

**14.** Article, de préférence un article moulé par injection, comprenant la composition polyoléfinique selon l'une quelconque des revendications 1 à 13.

**15.** Article selon la revendication 14, l'article étant un article moulé par injection choisi parmi les garnitures intérieures de véhicule, les garnitures extérieures de véhicule et les articles sous le capot.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013064364 A
- WO 2015000738 A
- WO 2019219678 A1
- WO 2022220255 A
- EP 45977 A2
- EP 395083 A2
- WO 98056830 A
- WO 98056833 A
- WO 98056834 A
- WO 0055215 A
- WO 0063261 A
- WO 2010078494 A
- US 7388061 B
- EP 361493 A
- EP 728769 A
- WO 02100904 A
- WO 0757160 A
- WO 2011061134 A
- US 4399054 A
- US 4469648 A
- WO 9844009 A1
- EP 472946 A
- WO 03011962 A
- EP 0572028 A1
- EP 395083 A


### Non-patent literature cited in the description


- **HUGGINS, M.L.** *J. Am. Chem. Soc.*, 1942, vol. 64 (11), 2716-2718